# EUROPEAN PATENT APPLICATION

(11) **EP 3 453 635 A1**
(43) Date of publication of application: **13.03.2019**
(21) Application number: 18194017.2
(22) Date of filing: 12.09.2018
(51) Int. Cl.: B65D 5/36, B65D 3/30, B29C 45/14, B29L 31/00

(54) **COLLAPSABLE RECEPTACLE AND MOULD FOR ITS MANUFACTURING**

(30) Priority: 12.09.2017 GB 201714620
(71) Applicant: Bloom-In-Box Ltd, Wigan, Lancashire WN1 2TB (GB)
(72) Inventor: Reardon, David, Ormskirk, Lancashire L40 8JD (GB)
(74) Representative: Hutchinson, Thomas Owen

(57) **Abstract**

A receptacle (10), such as a flower vase or drinking receptacle (100) is disclosed, which has a support structure (12) and a side wall (22) that together form a hollow interior volume (24). The support structure (12) has a base wall (14), an annular rim (16) and a plurality of uprights (18). The side wall (22) is formed from a sheet of polymer film, such as IML film, which extends around, and which is sealingly bonded to the exterior of the support structure. The side wall (22) has an upper edge forming at least part of an upper rim of the receptacle (10), at least part of which upper edge (19), that is to say, the parts of the upper edge (19) between the uprights (18), being unsupported. A liner (230) for the receptacle (10, 100) may be provided, which is suitably made from a biodegradable material, such as PLA. The receptacle can be made from recycled materials.

## Description

This invention relates to receptacles and to moulds for manufacturing the same.

Receptacles are used extensively for containing a quantity of liquid or solids, and are available in various forms. This invention is particularly concerned with plastics receptacles that are suitable for use as water-containing receptacles, such as vases, as well as general carriers, for example carrier bags and other types of container.

Broadly speaking, a receptacle comprises a base and a side wall that together define a hollow interior volume for retaining a quantity of a substance, such as a liquid or a solid. Plastics receptacles are ubiquitous and can be formed by injection moulding processes, which are well-known to persons skilled in the art. A problem with receptacles, and in particular plastics receptacles, is that of material usage, especially where the receptacle is intended as disposable packaging. As such, using excessive amounts of material is undesirable, and there is a long-felt need in the art to reduce the amount of plastics used in receptacles, and in packaging especially.

Known receptacles are described in the following published patent specifications: EP2236264 [NESTEC]; GB2510643 [INTERCONTINETAL GREAT BRANDS LLC]; CN104352131 [SUN ZHIJUN]; JP S4923202 [-]; and EP2420374 [NESTEC].

In a conventional receptacle, the base, side walls, lid and handles, where provided, are generally formed from plastics components having a finite thickness. The amount of material used to make the receptacle is determined by the size of the container as well as its wall thickness. Generally speaking, the larger the container, the thicker its wall thickness will need to be, and therefore, the greater amount of material that will be required to manufacture it. Where material usage is to be minimised, it is generally accepted practice to reduce the wall thickness as much as possible, thereby reducing the amount of material used in the receptacle's manufacture.

However, beyond a certain point, the wall thickness can become so thin that the receptacle is unable to retain its shape, or lacks sufficient strength to be useful. Thus, a compromise often needs to be struck between the amount of material used and the receptacle's designed duty cycle.

It is commonplace to use recycled materials when manufacturing packaging and receptacles especially where, as is commonly the case, the receptacle is intended to be a disposable item, such as a carrier bag or a packaging container. Whilst recycled materials are perfectly acceptable in many cases, where the outward appearance of the packaging is important, the use of recycled materials can be contraindicated for aesthetic reasons. In particular, recycled plastics tend to be grey, brown or black and this can limit their use in situations where the outward appearance of the receptacle is of paramount importance.

It is known, therefore, to use recycled materials to form receptacles, but to cover them, or wrap them, in a label to conceal the underlying recycled plastics - and thereby improve the aesthetics of the receptacle. However, this simply adds yet more material to the receptacle inasmuch as there are now two components, namely the receptacle itself, as well as its outer labelling.

A further known problem with using labelling to conceal the underlying recycled material is that of subsequent recyclability. Where, for example, the label and receptacle are manufactured from different materials, it can, in certain cases, render the receptacle non-recyclable (or at least difficult to recycle) because unless the label can be separated from the receptacle, it is generally classed as mixed waste, and thus in many locations, non-recyclable.

A need therefore exists for a solution to one or more of the above problems, and/or an alternative type of receptacle.

Various aspects of the invention are set forth in the appended claims.

In summary, a receptacle is provided, which has a support structure and a side wall that together form a hollow interior volume. The support structure has a base wall, an annular rim and a plurality of uprights. The side wall is formed from a sheet of polymer film, such as IML film, which extends around, and which is sealingly bonded to the exterior of the support structure. The side wall also has an upper edge forming at least part of an upper rim of the receptacle, at least part of which upper edge, that is to say, the parts of the upper edge spanning, or being between, the uprights, being unsupported. In certain embodiments, a liner for the receptacle may be provided, which is suitably made from a biodegradable material, such as PLA. The receptacle can be made from recycled materials.

According to an aspect of the invention, there is provided a receptacle comprising a support structure and a side wall together forming a hollow interior volume, the support structure comprising a base wall, an annular rim formed integrally with the base wall and a plurality of uprights integrally formed with, and extending upwardly from the rim, the receptacle being characterised by: the side wall being formed from a sheet of polymer film extending around the exterior of the support structure and having an interior surface that is sealingly bonded to an exterior surface of the lower rim and an exterior surface of each of the uprights.

The invention thus addresses one or more of the aforementioned problems by, for example: reducing the amount of plastics used by replacing at least part of the polymer side wall of the receptacle with the sheet of polymer film; concealing the support structure behind the sheet of polymer film (noting that it is not previously known to use black/brown recycled plastics in this way in prominent or decorative, "point-of-sale" articles); and/or providing a receptacle that is somewhat of a new hybrid between a plastics "carrier bag" and a "crate" or "box" -type receptacle. Thus, the benefits (e.g. stability, strength etc.) of a "crate" or "box" -type receptacle may be obtained simultaneously with the benefits of a plastics "carrier bag" -type receptacle (e.g. light weight, reduced material usage, decorative finish, etc.).

Suitably, the uprights are inwardly tapered, being wider at their lower ends where they meet the rim than at their upper, distal ends.

In a preferred embodiment, the side wall is formed from a sheet of in-mould labelling (IML) polymer film. IML polymer film is typically between about 0.01 and 0.1 mm thick, usually 0.07mm thick, which is significantly thinner than it is possible to make the side wall of an injection moulded receptacle. An IML thickness of about 0.07 mm has been found to provide an optimal trade-off between ease of handling (too thin and it tends to crease/tear during handling), final strength, and minimising material usage (too thick and too much plastic is used). However, it will be appreciated that the IML thickness can be of any dimension, and so the mould can, in certain embodiments, be adapted or adaptable so as to permit changing the spacing between the various components thereof, and thereby accommodate various IML thicknesses. Additionally, IML is compatible with most types of recycled thermoplastics, such as PP, LDPE and HDPE, and so can physically and chemically bond, fuse or weld thereto during an injection moulding process.

Suitably, the support structure is manufactured of injection moulded plastics, such as non-virgin PP, LDPE or HDPE. These materials are relatively inexpensive and are readily available.

Suitably, a tab may be formed at the distal end of one of more of the uprights, which tab or tabs project beyond a peripheral edge of the sheet of polymer film. This can provide a useful anchorage for decorative items, labelling, etc.

Additionally, or alternatively, a handle may be provided. Suitably, where provided, the handle is formed integrally with a distal end of one of more of the uprights and projects beyond an upper peripheral edge of the sheet of polymer film. Suitably, the handle interconnects the distal ends of two or more uprights, which can mean that weight borne by (the base of) the receptacle can be transmitted preferentially to the handles via the relatively stronger uprights, rather than via the relatively weaker sheet of polymer film.

A second aspect of the invention provides a mould for forming the receptacle as herein described, the mould comprising a cavity and a core insertable into the cavity, the cavity and core being tapered and complementarily shaped so as to fit together with a clearance therebetween, the clearance between the core and cavity forming a mould cavity, wherein the clearance between an end face of the core and an end face of the cavity defines a first mould cavity portion for forming, in use, the base wall of the receptacle, wherein the clearance between a distal circumferential part of the core and a distal part of a side wall of the cavity defines a second mould cavity portion for forming, in use, the annular rim of the receptacle, and wherein the clearance between a major perimetric part of the core and a major part of a side wall of the cavity defines a third mould cavity portion for forming, in use, the uprights of the receptacle, and wherein the clearance defining the third mould cavity portion alternates in a perimetric direction between a minimum value being substantially the thickness of the sheet of polymer film and a maximum value being the thickness of the uprights, such that when the core is fully inserted into the cavity with a sheet of polymer film therebetween, the core alternately clamps the sheet of polymer film against the cavity, and forms a series of third mould cavity portions, arranged radially inwardly of the sheet of polymer film, in perimetric direction.

Suitably, the alternating clearance of the third mould cavity portion is defined by a series of recesses formed in a side wall of the core. The or each of the recesses is preferably wider towards the distal end of the core than at the proximal end of the core - so as to form tapered uprights.

The mould suitably comprises a mandrel that is temporarily insertable into the cavity, the mandrel being tapered and complementarily shaped so as to fit into the cavity with a clearance substantially equal to the thickness of the sheet of polymer film therebetween, the mandrel being operatively connected to means for forming an electrostatic charge on an outer surface thereof for selectively retaining, in use, the sheet of polymer film around it.

In preferred embodiments, the cavity is operatively connected to means for forming an electrostatic charge on a surface thereof for selectively retaining, in use, the sheet of polymer film on a side wall thereof. Ideally, means, such as switch means, is provided for selectively connecting the means for forming an electrostatic charge to either the mandrel or the cavity.

Embodiments of the invention shall now be described, by way of example only, with reference to the accompanying drawings, in which:
Figure 1 is a perspective view of a first embodiment of a receptacle in accordance with the invention;
Figure 2 is a perspective view of a stack of nested receptacles as shown in Figure 1;
Figure 3 is a perspective view of the receptacle of Figure 1 in an inwardly-deformed state;
Figure 4 is a perspective view of a support structure forming part of the receptacle of Figure 1;
Figure 5 is a perspective view of the support structure of Figure 4 in an inwardly-deformed state;
Figure 6 is a schematic, partially transparent, perspective view of a mould for forming the receptacle of Figure 1;
Figure 7 is a schematic, exploded view of the mould of Figure 6;
Figure 7A is a schematic end view of an alternative core with adjustable plates for adjusting the mould-cavity separation;
Figure 8 is a schematic cross-section of Figure 6 on VIII-VIII;
Figures 9 to 12 are a schematic sequence showing the operation of the mould of Figure 6 as viewed on VIII-VIII;
Figure 13 is a schematic cross-section of Figure 6 on XIII-XIII;
Figures 14 to 16 are a schematic sequence showing the operation of the mould of Figure 6 as viewed on XIII-XIII;
Figure 18 is a perspective view of the receptacle of Figure 3 in use as a vase package;
Figure 19 is a perspective view of a second embodiment of a receptacle in accordance with the invention;
Figure 20 is a schematic, exploded view of a drinking receptacle in accordance with the invention;
Figure 21 is a schematic, perspective view of a drinking receptacle in accordance with the invention; and
Figure 22 is partial, perspective view of the base of a receptacle being an embodiment of the invention.

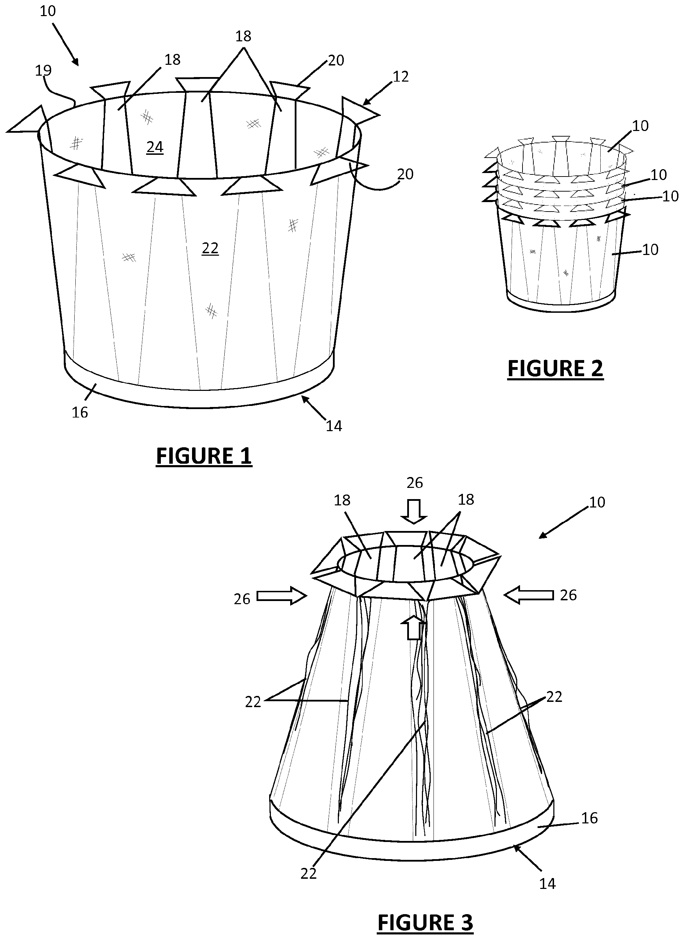

Figure 1 of the drawings is a perspective view of a receptacle 10 in accordance with the invention, which comprises a support structure 12 comprising a base wall with an integrally-formed, upstanding rim portion 16 from which extend upwardly, a set of uprights 18. The uprights terminate in outwardly-projecting flanges 20 whose function shall be described later. Around the outside of the receptacle 10, and bonded/integrally-formed with the outsides of the uprights 18 and the rim 16 of the base 14, is a thin film 22 of plastics, which is suitably manufactured from an in-mould label ("IML") -type material. As can be seen from Figure 1, the receptacle 10 defines a hollow interior volume 24 for retaining a quantity of substance, in this case a liquid, such as water.

The overall shape of the receptacle 10 is outwardly-tapered such that several receptacles 10 can be nested, as shown in Figure 2 of the drawings.

Due to the construction of the receptacle 10, and in particular, the relatively flexible thin plastics film 22, which spans the gaps between the uprights 18, it is possible to collapse 26 an upper part of the receptacle 10 inwardly, as shown in Figure 3 of the drawings so as to form an inwardly-tapered shape. As can be seen in Figure 3 of the drawings, the plastics film 22 located between the uprights 18 is able to fold/crease so as to accommodate the deformation of the receptacle 10. It will be appreciated that the configuration of the receptacle enables the formation of an inwardly-tapered receptacle via an injection moulding process, which would not, ordinarily, be possible. Furthermore, due to the fact that the thin plastics film 22 is integrally-formed with the support structure 12, a watertight interior volume 24 is thus produced - regardless of the final shape of the receptacle.

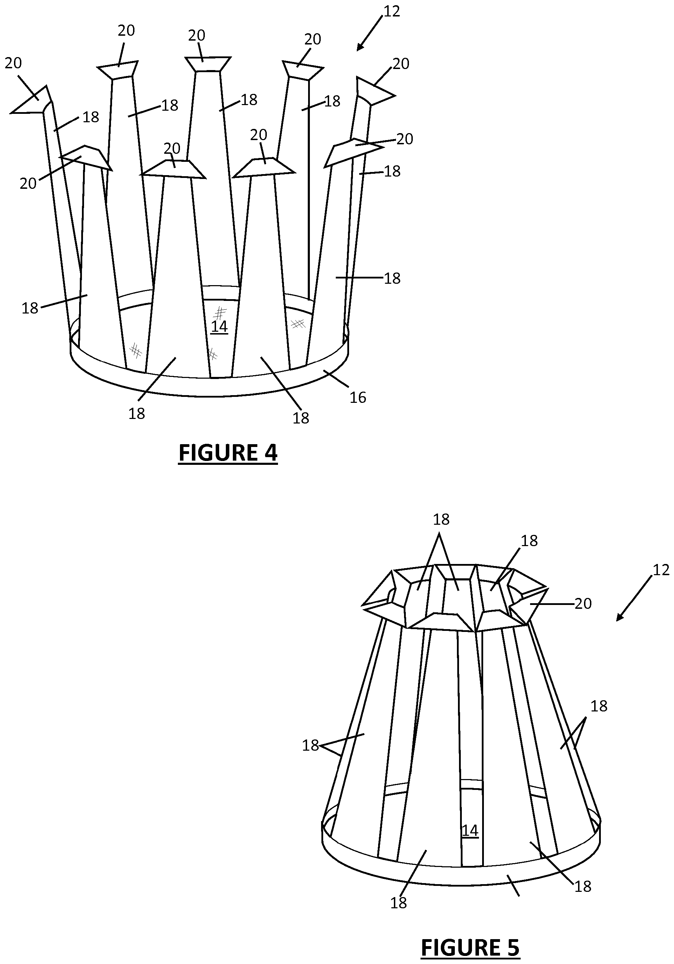

Figures 4 and 5 of the drawings show the aforementioned support structure 12 in isolation, i.e. without the plastics film 22 present. It will be appreciated that the support structure itself, in isolation, does not constitute the invention, but it is illustrated herein for clarity/explanatory purposes only.

As can be seen from Figure 4, the support structure 12 comprises a generally flat, circular base wall 14 manufactured from injection moulded plastics, such as polyethylene or polypropylene. The peripheral edge of the base wall 14 terminates in an upwardly-projecting rim part 16, which is typically 1 to 2cm high. Integrally-formed with, and extending upwardly from, the rim part 16 are the aforementioned upright 18, of which there are nine in the illustrated embodiment, but there could be any number of uprights 18. Each of the uprights 18 has a lower part, where it merges with the rim 16, which is relatively wider than an upper part located distally from the rim 16. This particular shape, namely the tapering shape of the uprights 18 is important for two main reasons. Firstly, as shown in Figure 5 of the drawings, it enables the uprights 18 to be bent inwardly out their distal ends so as to form an inwardly-tapered receptacle shape, without interference/contact between the uprights. The second reason why the tapering of the uprights 18 is important shall become apparent from the following description.

As previously mentioned, the uprights 18 terminate in tabs 20, to which further thin film plastics can be typically formed or affixed for decorative or other reasons.

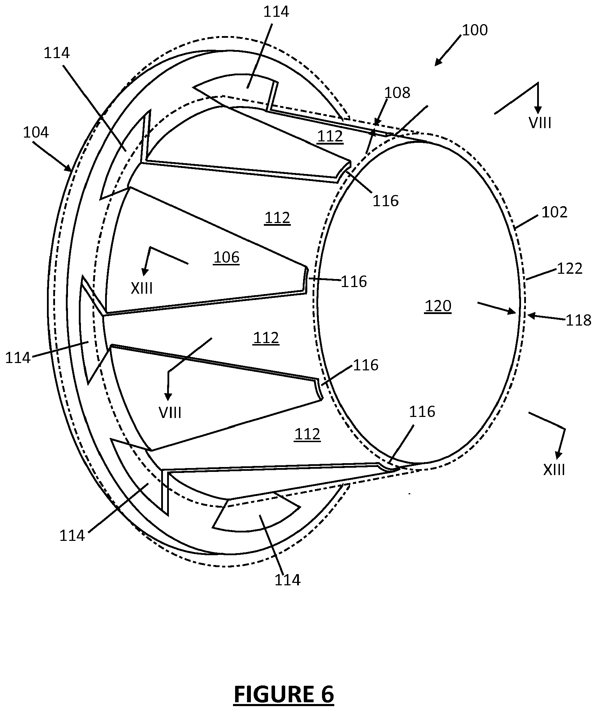

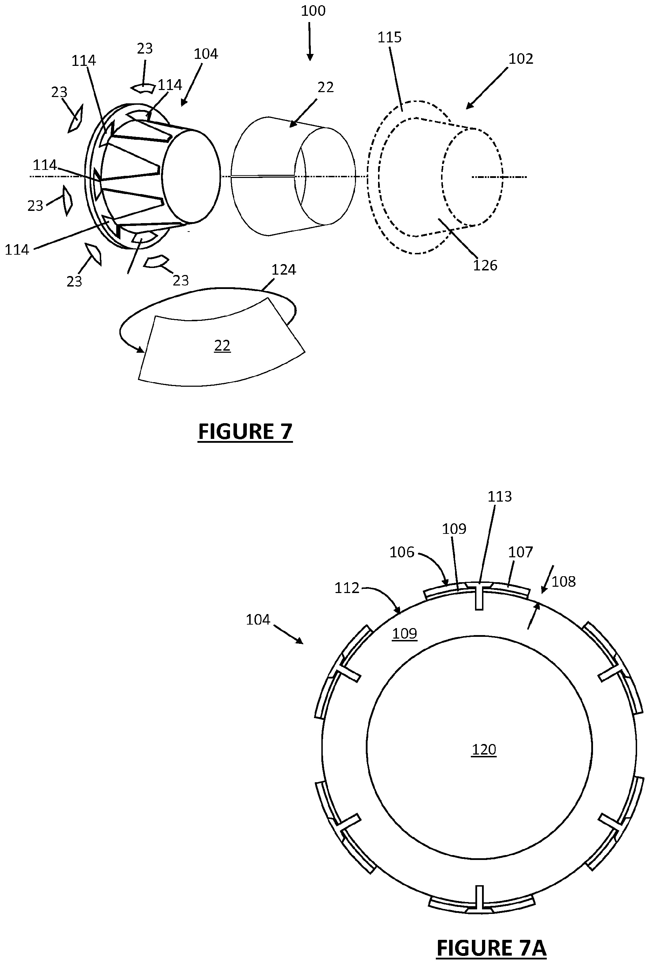

The receptacle 10 can be formed using a two-part mould, as shown in Figures 6 to 16 of the drawings. Figure 6 is a schematic view of a two-part mould 100 for manufacturing the receptacle 10 as shown in Figures 1, 2 and 3 previously. The mould 100 comprises a first cavity part 102 indicated, schematically, in Figure 6 by the dashed line. In reality, the cavity part 102 of the mould 100 would be solid, but that would obscure the view of the core 104 in the drawing. The cavity part 102 of the mould 100 essentially comprises a truncated conical cavity into which a complementarily-shaped core 104 can be axially inserted, as shown in Figure 7 of the drawings.

The core 104 has an outer surface 106, which is generally the same shape as the shape of the cavity 102 save for a small clearance between the outer surface 106 of the core 104 and the inner surface 110 of the cavity 102. The dimension of the clearance 108 is ideally, exactly the same as the thickness of the thin plastics film 22, which is inserted into the mould 100 between the cavity part 102 and the core 104, as shall be explained in detail below. If the clearance 108 is too big, i.e. greater than the IML thickness, then this may result in flashing; whereas if the clearance is too small, i.e. less than the IML thickness, then this may result in dragging the IML into the cavity as the core is inserted.

In certain embodiments, for example that shown in Figure 7A of the drawings, the dimension of the clearance 108 is adjustable so that it can be adjusted to be the same as the thickness of a given plastics film 22. In Figure 7A, it can be seen that the outer surface 106 is formed by a set of plates 107, which bolt 113 onto a truncated-cone core 109. One or more shims 111 can be interposed between the plates 107 and the core 109, to obtain the desired clearance 108. This adjustment could equally be effected using hydraulics for adjusting, or spring-loading, the plates 107.

The core 104 of the mould 100 has recesses machined or otherwise formed in it, which define the cavities that later form the uprights 18 of the support structure 12 as previously described. The shape of these recesses 112 is tapered, being wider at the distal end of the core than at its proximal end. Also shown in Figure 6 of the drawings is the core 104 comprising additional recesses (negative space) 114, which define the mould cavities for the outwardly-projecting tabs 20, previously described. In an alternative embodiment, the additional recesses 114 are formed instead, in a rim 115 of the cavity. A further small recess part 116 interlinking the proximal ends of the recesses 112 together form the mould cavity for the rim part 16 of the support structure 12 as previously described.

The clearance 118 between the flat end face 120 of the core 104 and the flat end surface 122 of the cavity 102 forms the mould cavity for forming the base wall 14 of the support structure previously described.

As can be seen in Figure 7 of the drawings, which is an exploded view of the mould 100, the core 104 can be inserted axially into the cavity 102 to form the overall mould as shown in Figure 6 of the drawings.

In order to manufacture a receptacle in accordance with the invention, the mould 100 is first separated such that the core 104 is axially or otherwise retracted from the cavity 102. An in-mould label (IML) 22 is cut to an appropriate shape and is rolled 124 to form a truncated cone shape as shown in the middle of Figure 7. Once so rolled, the in-mould label 22 is inserted, on a mandrel, into the cavity 102. The mandrel (not shown) is connected to an electrostatic charge generator so as to securely retain the in-mould label temporarily around it using electrostatic attraction. In other embodiments, a vacuum is used to hold the in-mould label temporarily onto the mandrel.

Upon insertion of the mandrel (not shown) into the cavity 102, the cavity is then provided with an electrostatic charge or a vacuum (as opposed to the mandrel) so as to attract/stick the outer surface of the in-mould label 22 onto the interior side wall of the cavity 102. The mandrel (not shown) can then be withdrawn, leaving the in-mould label 22 temporarily affixed to the interior side wall 126 of the cavity 102.

In the present embodiment, a further set of in-mould labels 23 are then positioned within the recesses 114 of the core 104 using a pick-and-place machine (not shown). Again, the additional in-mould labels 23 are temporarily affixed to the core 104, in their respective cavities 114, by electrostatic attraction or by a vacuum.

That done, the core 104 can be axially inserted into the cavity 102 so that liquid polymer can be injected into the mould 100 spaces so as to form the receptacle 10 previously described.

The problem with known in-mould labelling is that the electrostatic attraction, which holds the in-mould label in position, can cause the in-mould label to "jump" from one surface to another as the mould parts 102, 104 are brought together. The reason for this is that the only thing holding the in-mould label 22 in position against the interior side wall 126 of the core is electrostatic attraction. However, when the core 104, which is made of metal, is inserted into the cavity 102, the electrostatic charge can discharge to the core 104 (often detectable by a "cracking" sound) causing the in-mould label 22 to "jump" from being attached to the inner sidewall 126 of the cavity 102 - to being affixed to the outer surface 106 and the recesses 112 of the core 104. When this happens, upon injection of the liquid polymer into the mould spaces, the mould will fill on the reverse side of the in-mould label 22, causing the in-mould label 22 to be located inside, rather than outside, the uprights 18 and rim 16 previously described. This would amount to a "failure" of the moulding process because the uprights 18 and the rim 16 would be outwardly visible - with the in-mould label 22 located inwardly behind the uprights 18 and rim 16.

The invention, however, overcomes this problem by the configuration of the mould cavities 112 and the tapering of the core 104 and cavity 102.

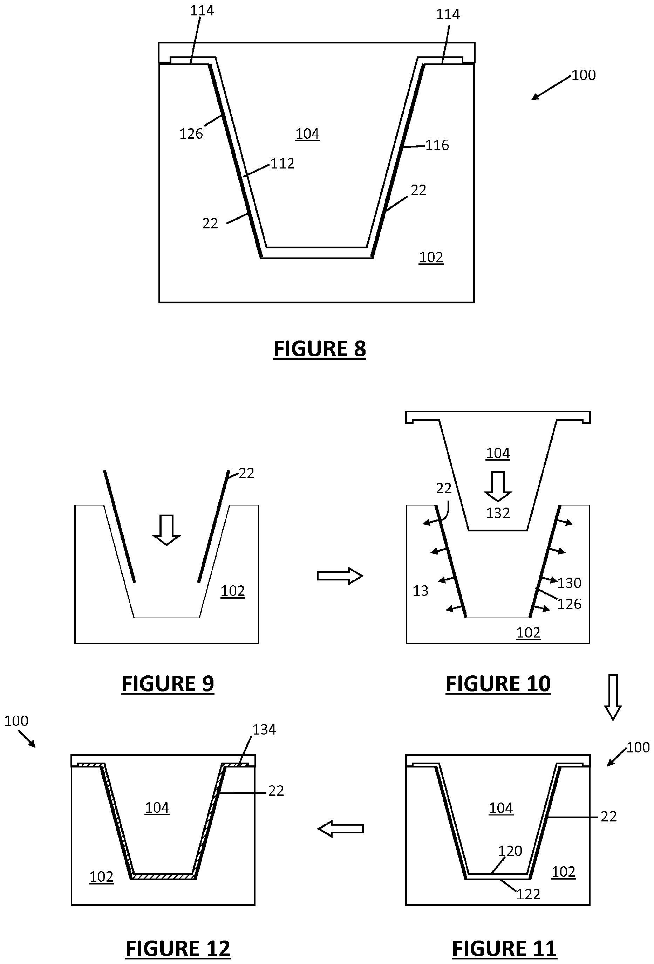

Referring to Figure 8 of the drawings, which is a schematic cross-section of Figure 6 on VIII-VIII, it can be seen that, in that there is no contact between the core 104 and the cavity 102 and so the previously mentioned electrostatic discharge, which might otherwise cause the in-mould label 22 to "jump" from the side wall 126 of the cavity 102 to the surface 112 of the core, does not occur.

Referring to Figures 9, 10, 11 and 12, which are a sequence, it can be seen that the in-mould label 22 is first rolled and inserted into the cavity 102 as previously described. In Figure 10, an electrostatic charge 130 is used to temporarily affix the in-mould label 22 to the inner side wall 126 of the cavity 102. Then, the core 104 can be inserted 132 axially into the cavity 102 to result in the configuration shown in Figure 11 of the drawings. Finally, as shown in Figure 12 of the drawings, polymer 134 is injected into the mould cavity so as to form the base wall 14, rim 16 and uprights 18 of the support structure 12 of the receptacle - inwardly of the in-mould label 22 as previously described. This results in the formation of a receptacle, for example, as shown in Figures 1, 2 and 3 of the drawings.

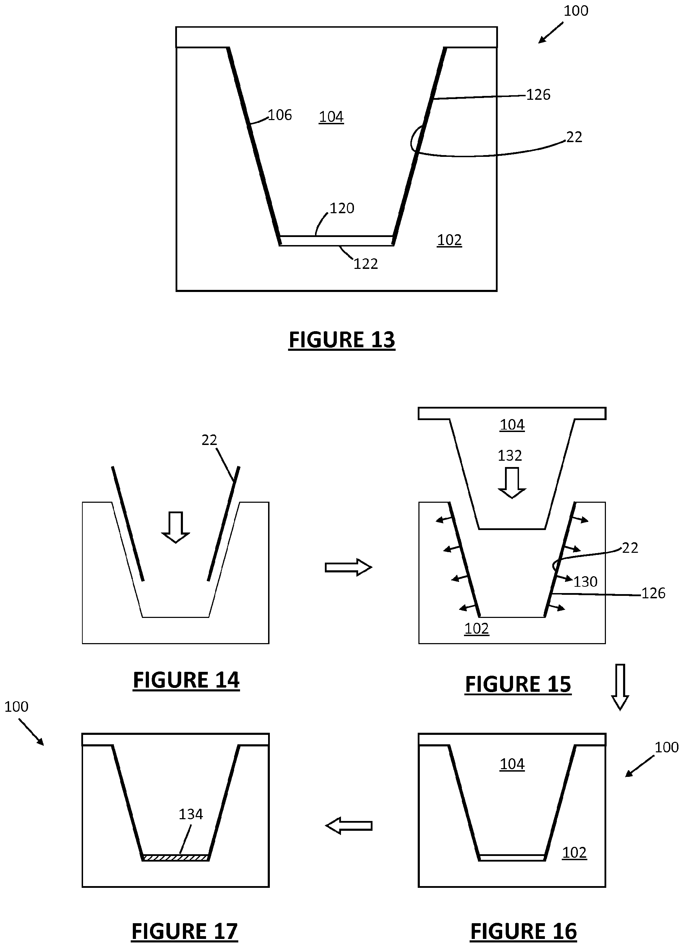

Referring now to Figure 13 of the drawings, which is a schematic cross section of Figure 6 on XIII-XIII, here it can be seen that the outer surface 106 of the core 104 comes very close to touching the in-mould label, which might be expected to result in the "jumping" of the in-mould label 22 from the side wall 126 of the cavity 104 to the outer surface 106 of the core 104. However, this does not occur because of the tapering of the core 104 as well as the tapering of the recesses 112.

This particular configuration, somewhat unexpectedly, avoids the in-mould label 22 from "jumping" in the manner that would be expected. The reason for this is that, due to the tapering of the core 104 and cavity 102 there is no actual contact between the outer surface 106 of the core 104 and the in-mould label 22 until infinitesimally before the final closing/shut-off of the mould 100. As such, the core 104 can be inserted 132 all the way into the cavity 102 and does not touch the in-mould label 22 until the very last instant, at which point the mould 100 is actually "shut-off" and at this instant, the outer surface 106 of the core 104 eventually touches the inner surface of the in-mould label 22 thereby clamping it between the outer surface of the core 104 and the side wall 126 of the cavity 102.

Furthermore, because the core does not contact the in-mould label 22 until the very last instant, it does not tend to "drag" the in-mould label 22 down into the core, but rather leaves it in-situ.

Now, as can be seen from the sequence of Figures 14, 15, 16 and 17. The in-mould label 22 is inserted and retained by electrostatic attraction 130 (and/or a vacuum) to the inner surface 126 of the core 102. The core 104 can then be inserted 132 into the cavity 102 and there is no contact until infinitesimally before the shutting-off of the mould 100 at the point shown, schematically, in Figure 16 of the drawings. Now, when polymer 134 is injected into the mould 100 it fills the cavities 112, 116, 118 internally of the in-mould label 22, resulting in the receptacle 10, as shown in Figure 1 of the drawings, namely with the in-mould label 22, located outwardly of the support structure 12. This is an entirely unexpected result and runs contrary to the established wisdom in the art of in-mould labelling.

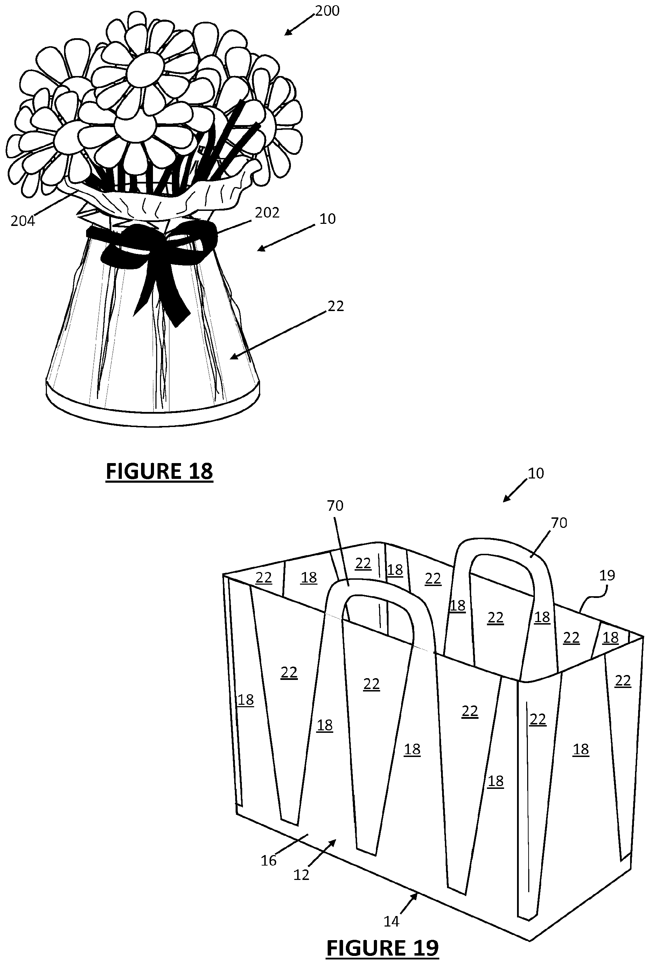

Referring to Figure 18 of the drawings, it can be seen that the receptacle 10 as shown in Figures 1, 2 and 2 of the drawings, can be put to good use as a vase for a flower arrangement 200 with a ribbon 202 enabling the upper part of the receptacle 10 to be collapsed inwardly 26 as previously described so as to form an inwardly-tapered "vase". A decorative film 204 can be affixed to the tabs 20 of the support structure thereby improving the aesthetics of the receptacle. It will be appreciated also that because the in-mould label 22 is located outside the support structure (not visible), that any design or colour of in-mould label can be used to mask/conceal/hide the support structure 12, which would typically be made from black, grey or brown recycled plastics. Furthermore, because the "vases" can be nested before they are collapsed and assembled as shown in Figure 18, this significantly reduces the packing volume of the receptacles 10 during transit, storage and distribution.

It will be appreciated that the invention is not restricted to the particular embodiments shown. Indeed, the same principles can be used to manufacture receptacles of different shapes, sizes and configurations.

For example, as shown in Figure 19 of the drawings, there is shown a generally cuboidal receptacle 10 which has a support structure 12 similar to that previously described, comprising a flat base wall 14, an upstanding rim portion 16 and a set of tapered uprights 18 extending from the rim 16. In this example, the in-mould label 22 spans the gaps between the uprights 18 so as to define a useful hollow interior volume for carrying articles. Also, in this particular embodiment, rather than having the outwardly-projecting tabs 20 of the "vase" embodiment previously described, these are omitted, but instead, a set of handles 70 have been formed with 2 of the uprights 18. The handles 70 are individually formed with the uprights and thus can be manufactured in a single injection moulding process similar to that described previously.

Advantageously, because the handles 70 are effectively extensions of one or more uprights 18, weight borne by the base of the receptacle 10 can be transmitted preferentially to the handles via the relatively stronger uprights, rather than via the in-mould label film 20. Thus, the receptacle shown in Figure 19 of the drawings is somewhat of a new hybrid between a plastics "carrier bag" and a "crate" or "box" -type receptacle. Thus, the benefits (e.g. stability, strength etc.) of a "crate" or "box" -type receptacle can be obtained simultaneously with the benefits of a plastics "carrier bag" -type receptacle (e.g. light weight, reduced material usage, decorative finish, etc.).

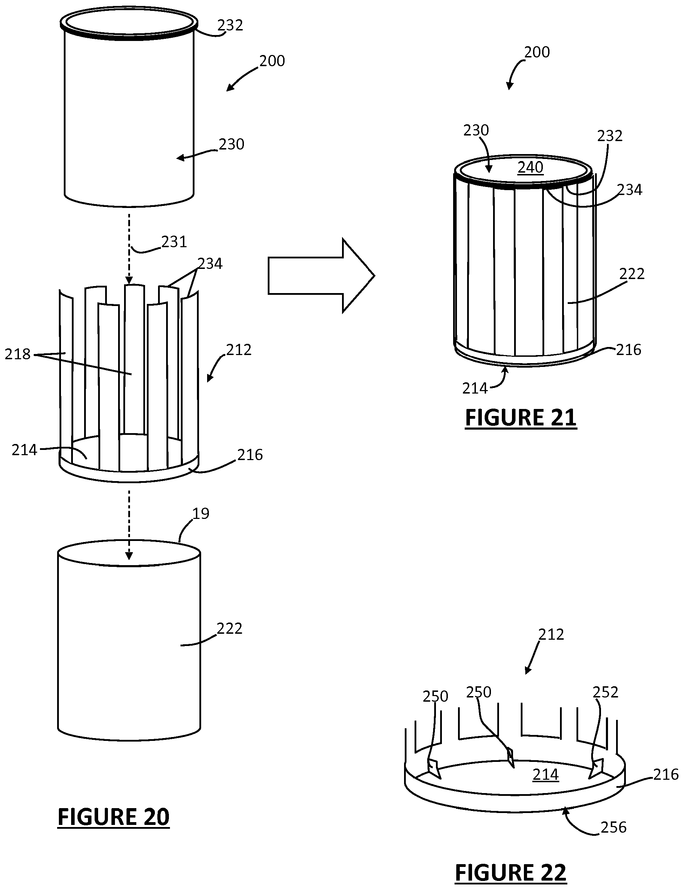

Referring now to Figures 20 and 21 of the drawings, an embodiment of the invention is illustrated as a drinking receptacle 200. The drinking receptacle 200 comprises a support structure 212, which has a base wall 214, a peripheral rim 216, and a set of uprights 218 as previously described. An IML label 222 forms the side wall, which surrounds, and is bonded to, the exterior of the support structure 212 in the manner previously described. The upper peripheral edge 19 of the IML label 222 is partially unsupported, also as previously described.

As it is not normally permissible to use recycled materials for handling/containing foodstuffs, so the receptacle 200 further comprises a liner 230, formed as a cup-shape and having an upper peripheral rim 232 which projects radially outwardly around the opening thereof. The insert 230 is made from a biodegradable plastic, such as PLA, and this enables it to be removed and discarded of via a composting waste disposal route. Meanwhile, the remainder of the receptacle 200, that is to say the support structure 212 and side wall 222, can be disposed of via traditional plastics recycling waste streams. This configuration means that the entire receptacle 200 is recyclable and/or biodegradable, which has positive environmental benefits.

The insert 230 simply slides 231 into the interior of the support structure 212. The insert's upper rim 232 engages the upper, distal ends 234 of the uprights 218, thereby supporting it. In addition, the base (not visible) of the insert 230 can rest upon and/or be supported by, the base wall 214 of the support structure 212.

The drinking receptacle 200 can be assembled as shown in Figure 21 of the drawings. In this example, the liner provides the means for retaining a liquid beverage and because the liner can be made from "virgin" PLA, it is suitable for use in retaining foodstuffs (in particular beverages). The upper rim 232 of the insert 230 provides two functions, namely engagement with the uprights 218, as previously described, but also (especially where an overhang or return lip is provided) to provide a comfortable mouth rim for the receptacle 200 in use.

The remainder of the receptacle 200 can be manufactured from recycled (i.e. non-virgin) materials as they do not come into contact with the foodstuffs contained within the liner 230.

The IML Label 222 can usefully be pre-printed with decoration, advertising and other information and, in certain cases.

The support structure/side wall assembly could, in certain cases, be reusable because the only part coming into contact with the foodstuff and/or the user's mouth, could be the liner 230.

It has been found that when several receptacles are nested together, they can, in certain circumstances, jam together. If up to say 5-10 receptacles 10,200 are nested (i.e. stacked one inside the other), they are generally easily separable. However, when the "stack" of receptacles gets above 10 or so receptacles, it has been found that the weight of the receptacles tends to lock the lower receptacles together.

To overcome this issue, it has been found that a formation 250 can conveniently be formed in the base wall 214 or the rim 216 of the support structure 212.

Referring to Figure 22, the aforesaid formations are shown formed at the base wall 214 - side wall 216 junction of the support structure 212. In this embodiment, five formations 250 are provided, each having an upper edge 252, which forms an abutment surface/edge against which the underside 256 of the base wall 214 of a receptacle 200 nesting within it abuts. This configuration effectively separates the nested receptacles by a small amount (i.e. by the vertical height of the formations 250), thereby preventing or inhibiting jamming of receptacles to one another and/or damage to the side walls 222 when they are subsequently separated.

The invention is not restricted to the details of the foregoing embodiments, which are merely exemplary of the invention. For example, it will be appreciated that any materials, shapes or dimensions are illustrative of the invention, and are not necessarily intended to restrict the scope of this disclosure. In addition, the formations 250 shown in relation to Figure 22 could be used in conjunction with any of the other embodiments of the invention - especially those where the side walls taper outwardly when the receptacles are nested. The liner 230 shown in Figures 20 and 21 of the drawings could equally be used in conjunction with any other embodiments of the invention.

## Claims

1. A receptacle (10) comprising a support structure (12) and a side wall (22) together forming a hollow interior volume (24), the support structure (12) comprising a base wall (14), an annular rim (16) formed integrally with the base wall (14) and a plurality of uprights (18) integrally formed with, and extending upwardly from the rim (16), the receptacle (10)being **characterised by**: the side wall (22) being formed from a sheet of polymer film extending around the exterior of the support structure (12) and having an interior surface that is sealingly bonded to an exterior surface of the lower rim (16) and an exterior surface of each of the uprights (18); and by an unsupported upper edge (19) of the side wall (22) formed from the sheet of polymer film forming at least part of an upper rim of the receptacle (10).

2. The receptacle (10) of claim 1, wherein the uprights (18) are inwardly tapered, being wider at their lower ends where they meet the rim (16) than at their upper, distal ends.

3. The receptacle (10) of claim 1 or claim 2, wherein the side wall (22) is formed from a sheet of in-mould labelling polymer film having a thickness of between 0.01mm and 0.1mm, or substantially 0.07mm.

4. The receptacle (10) of any preceding claim, wherein the support structure (12) is manufactured of injection moulded plastics, the plastics comprising any one or more of the group comprising: recycled polyethylene; recycled polypropylene; biodegradable plastic; and PLA.

5. The receptacle (10) of any preceding claim, further comprising any one or more of the group comprising: a tab (20) formed at the distal end of one of more of the uprights (18), which tab (20) or tabs project beyond a peripheral edge (19) of the sheet of polymer film (22); a handle (70) formed integrally with a distal end of one of more of the uprights (18); a handle (70) formed integrally with a distal end of one of more of the uprights (18), which projects beyond a peripheral edge (19) of the sheet of polymer film (22), the handle (70) interconnecting the distal ends of two or more uprights (18); and a formation (250) in the upright (18) or base wall (14) comprising an abutment (252) for separating, in use, the base wall (256, 14) of one receptacle (10) from the base wall (14) of another receptacle (10) nested therein.

6. The receptacle (10) of any preceding claim, being formed as a flower vase, and further comprising means (202) for pulling (26) the distal ends of the uprights (18) radially inwardly so as to form an inwardly-tapered arrangement in which the width of the base (14) is greater than the width of an opening at top of the hollow interior volume (24).

7. The receptacle (10) of any of claims 1 to 5, being formed as a disposable drinking receptacle (200), and further comprising a liner (230) forming a second hollow interior volume and having an upper rim (232), the liner (230) being slideably receivable in the support (212) structure such that its upper rim (232) is supported by the distal ends (234) of the uprights (218).

8. The receptacle (10, 200) of claim 7, wherein the support structure (212) and the side wall (222) are manufactured from recycled plastics, and wherein the liner (230) is manufactured from a biodegradable plastics material, such as PLA.

9. A mould (100) for forming the receptacle (10, 200) of any preceding claim, the mould (100) comprising a cavity (102) and a core (104) insertable into the cavity (102), the cavity 102 and core (104) being tapered and complementarily shaped so as to fit together with a clearance (108) therebetween, the clearance (108) between the core (104) and cavity (102) forming a mould cavity, wherein the clearance (118) between an end face (120) of the core (104) and an end face (122) of the cavity (102) defines a first mould cavity portion for forming, in use, the base wall (14) of the receptacle (10), wherein the clearance (108) between a distal circumferential part of the core (104)and a distal part of a side wall of the cavity (102) defines a second mould cavity portion for forming, in use, the annular rim (16) of the receptacle (10), and wherein the clearance (108) between a major perimetric part of the core (104) and a major part of a side wall of the cavity (102) defines a third mould cavity portion for forming, in use, the uprights (18) of the receptacle (10), and wherein the clearance defining the third mould cavity portion alternates in a perimetric direction between a minimum value being substantially the thickness of the sheet of polymer film (22) and a maximum value being the thickness of the uprights (18), such that when the core (104) is fully inserted into the cavity (102) with a sheet of polymer film (22) therebetween, the core (104) alternately clamps the sheet of polymer film (22) against the cavity (102), and forms a series of third mould cavity portions, arranged radially inwardly of the sheet of polymer film (22), in perimetric direction, each of the recesses being wider towards the distal end of the core (104) than at the proximal end of the core (104).

10. The mould (100) of claim 9, wherein the alternating clearance of the third mould cavity portion is defined by a series of recesses (112) formed in a side wall of the core (104).

11. The mould (100) of claim 9 or claim 10, further comprising a mandrel temporarily insertable into the cavity (102), the mandrel being tapered and complementarily shaped so as to fit into the cavity (102) with a clearance substantially equal to the thickness of the sheet of polymer film (22) therebetween, the mandrel being operatively connected to means for forming an electrostatic charge on an outer surface thereof for selectively retaining, in use, the sheet of polymer film (22) around it.

12. The mould (100) of any of claims 9 to 11, wherein the cavity (102) is operatively connected to means for forming an electrostatic charge on a surface thereof for selectively retaining, in use, the sheet of polymer film (22) on a side wall thereof, and means for selectively connecting the means for forming an electrostatic charge to either the mandrel or the cavity (102).

13. The mould (100) of any of claims 9 to 12, further comprising a mandrel temporarily insertable into the cavity, the mandrel being tapered and complementarily shaped so as to fit into the cavity with a clearance substantially equal to the thickness of the sheet of polymer film therebetween, the mandrel being operatively connected to means for forming vacuum at an outer surface thereof for selectively retaining, in use, the sheet of polymer film (22) around it.

14. The mould (100) of any of claims 9 to 13, wherein the cavity (102) is operatively connected to means for forming a vacuum at a surface thereof for selectively retaining, in use, the sheet of polymer film (22) on a side wall thereof and means for selectively connecting the means for forming the vacuum to either the mandrel or the cavity (102).

15. The mould (100) of any of claims 9 to 14, wherein the means for forming a vacuum comprises a vacuum pump operatively connected, via one or more pipes, to one or more ports formed in a surface of the mandrel or cavity (102) in regions where the sheet of polymer film (22) contacts it.
